# EUROPEAN PATENT APPLICATION

(11) **EP 4 610 946 A1**
(43) Date of publication of application: **03.09.2025**
(21) Application number: 25157965.2
(22) Date of filing: 14.02.2025
(51) Int. Cl.: G06V 20/56, G06V 20/58

(54) **CAMERA MONITORING SYSTEM INCLUDING FIELD OF VIEW ZOOM**

(30) Priority: 27.02.2024 US 202418588828
(71) Applicant: Stoneridge Electronics AB, 16903 Solna (SE)
(72) Inventor: COOPRIDER, Troy, White Lake, 48386 (US); MURTHY, Banuprakash, Novi, 48374 (US); KIRWAN, John, Troy, 48084 (US)
(74) Representative: Marks & Clerk LLP

(57) **Abstract**

A method of displaying camera views in a camera monitor system for a tractor and trailer, the method includes information that is displayed to a driver on a display, a field of view that is captured with a camera, a triggering event that is identified related to the captured field of view, a feature that is recognized in the captured field of view related to the triggering event, and the displayed information is modified to include displaying at least a portion of the captured field of view including the feature.

## Description

### TECHNICAL FIELD

This disclosure relates to a camera monitoring system (CMS) for a vehicle, and specifically, to a method and system for enhancing driver awareness with the CMS.

### BACKGROUND

Mirror replacement systems, and camera systems for supplementing mirror views, are utilized in commercial vehicles to enhance the ability of a vehicle operator to see a surrounding environment. Camera monitoring systems (CMS) utilize one or more cameras to provide an enhanced field of view to a vehicle operator. In some examples, the camera systems cover a larger field of view than a conventional mirror, or include views that are not fully obtainable via a conventional mirror.

Operating a commercial vehicle with a CMS provides an operator with improved safety over conventional mirrors, as the cameras can provide visibility in situations that mirrors cannot. However, whether mirrors and/or a CMS are incorporated into a commercial vehicle, operating a commercial vehicle remains challenging due to limited visibility due to the commercial vehicle's substantial length.

### SUMMARY

In one exemplary embodiment, a method of displaying camera views in a camera monitor system for a tractor and trailer, the method includes information that is displayed to a driver on a display, a field of view that is captured with a camera, a triggering event that is identified related to the captured field of view, a feature that is recognized in the captured field of view related to the triggering event, and the displayed information is modified to include displaying at least a portion of the captured field of view including the feature.

The displayed information may be a legally prescribed field of view that is provided by the captured field of view.

The legally prescribed field of view may correspond to one of a wide angle vehicle side rear view and a narrow angle vehicle side rear view.

The modifying step may include at least temporarily replacing the legally prescribed view.

The method may include a step of moving the displayed at least the portion of the captured field of view from the display to another display after a predetermined criterion.

The predetermined criterion may be a risk scenario of a greater rank than the triggering event.

The method may include a step of cropping the captured field of view to provide a first region of interest that corresponds to a legally prescribed field of view, and a step of cropping the captured field of view to provide a second region of interest that corresponds to the at least the portion of the captured field of view. The at least the portion of the captured field of view may be enlarged on the display compared to a displaying of the legally prescribed field of view.

At least a portion of the first and second regions of interest may overlap one another.

At least a portion of the second region of interest may be outside the legally prescribed field of view.

The first and second regions of interest may be displayed on different displays than one another.

The first and second regions of interest may be displayed on a same display as one another.

The second region of interest may be displayed in a window that is arranged over the display of the legally prescribed field of view.

The method may include a step of cropping the captured field of view to provide a third region of interest that corresponds to another legally prescribed view. Both legally prescribed views may be illustrated on a common display.

The triggering event may be a potential collision with an object. The feature may include at least one of the object and a portion of a trailer in closest proximity to the object.

The object may be an overtaking vehicle. The portion of the trailer may include a trailer end.

The object may be a vulnerable road user.

The triggering event may be a potential trailer curb strike. The feature may include at least one of a curb and a trailer wheel.

The triggering event may be a potential trailer lane crossing. The feature may include at least one of a trailer end and a lane marking.

The triggering event may be a steering angle above a threshold, and the feature is a region between a tractor and a trailer.

In another exemplary embodiment, a camera monitor system for a vehicle includes at least one camera that is configured to capture a field of view, multiple displays that include first and second displays that are configured to respectively display a first information and a second information, the first information corresponding to a legally prescribed field of view, and a controller that is in communication with the first and second displays and the at least one camera. The controller is configured to identify a triggering event that is related to the captured field of view, recognize a feature in the captured field of view that is related to the triggering event, and modify at least one of the first and second information to include displaying at least a portion of the captured field of view including the feature. The displayed at least a portion of the captured field of view is enlarged relative to the displayed legally prescribed field of view.

These and other features of the present disclosure can be best understood from the following specification and drawings, the following of which is a brief description.

### BRIEF DESCRIPTION OF THE DRAWINGS

The disclosure can be further understood by reference to the following detailed description when considered in connection with the accompanying drawings wherein:
Figure 1A is a schematic front view of a commercial truck with a camera monitoring system (CMS) used to provide at least Class II and Class IV views.
Figure 1B is a schematic top elevational view of a commercial truck with a camera monitoring system providing Class II, Class IV, Class V and Class VI views.
Figure 2A is a schematic view of the CMS and a vehicle cabin, including displays.
Figure 2B schematically illustrates the vehicle cabin and an example arrangement of displays.
Figure 3 is a flowchart depicting a method of displaying camera views in the vehicle cabin.
Figure 4 schematically illustrates an example captured field of view and cropped regions used for display.
Figures 5A and 5B respectively show left-hand and right-hand narrow angle views that are displayed to the operator during a turning maneuver.
Figure 6 is one example of displaying an enlarged portion of the narrow angle view along with the narrow angle view according to the disclosed method.
Figure 7 is another example of displaying the enlarged portion of the captured field of view according to the disclosed method.

The embodiments, examples and alternatives of the preceding paragraphs, the claims, or the following description and drawings, including any of their various aspects or respective individual features, may be taken independently or in any combination. Features described in connection with one embodiment are applicable to all embodiments, unless such features are incompatible.

### DETAILED DESCRIPTION

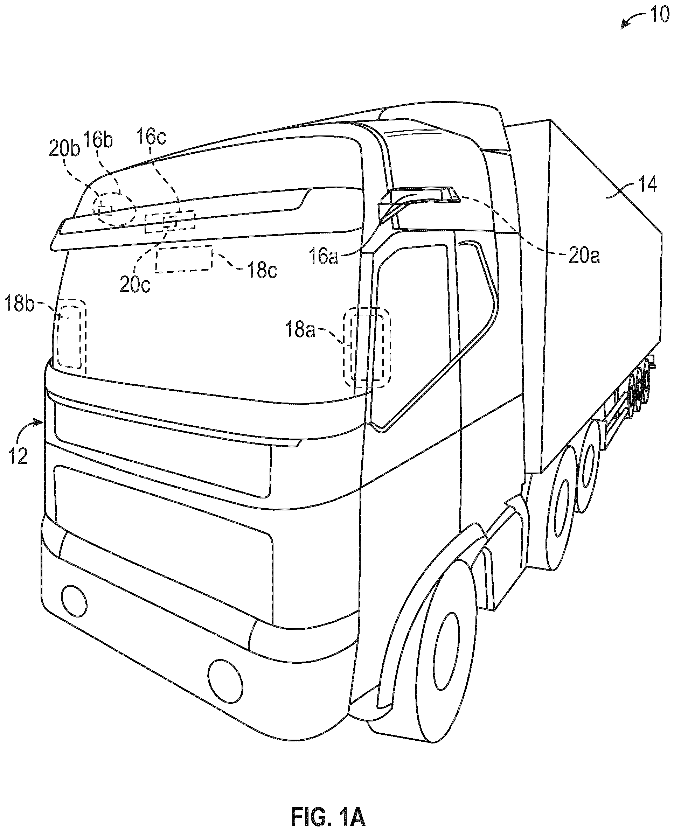

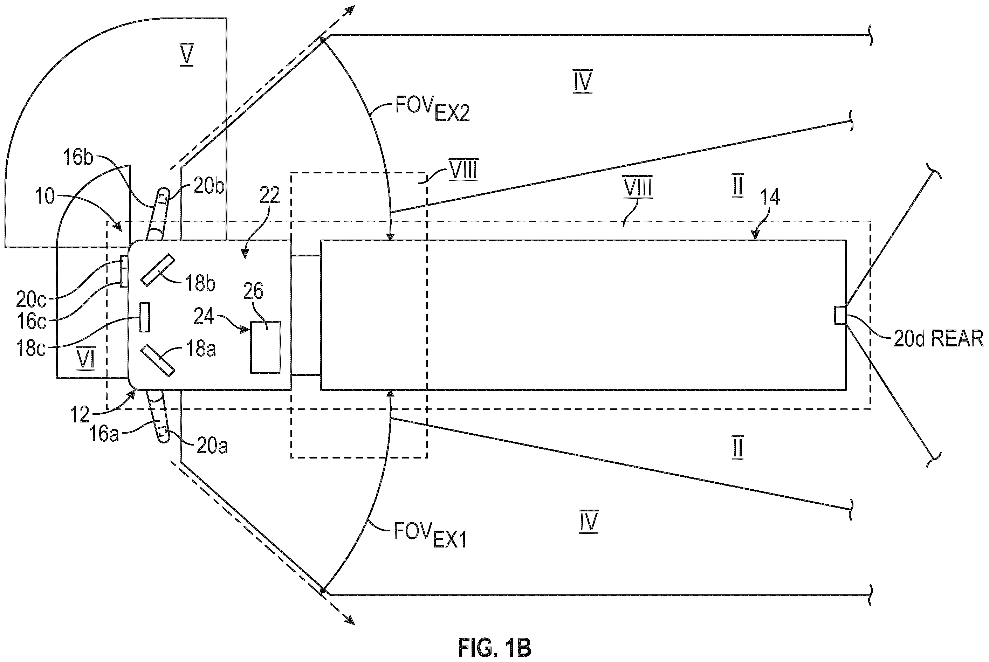

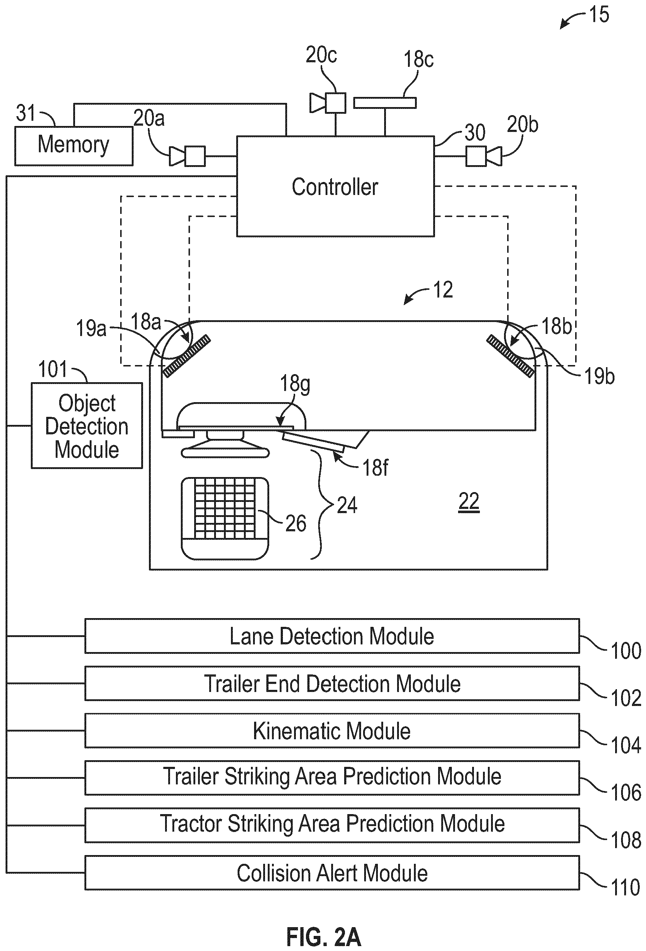

A schematic view of a commercial vehicle 10 is illustrated in Figures 1A and 1B. The vehicle 10 includes a vehicle cab or tractor 12 for pulling a trailer 14. It should be understood that the vehicle cab 12 and/or trailer 14 may be any configuration. Although a commercial truck is contemplated in this disclosure, the invention may also be applied to other types of vehicles. The vehicle 10 incorporates a camera monitor system (CMS) 15 (Fig. 2A) that has driver and passenger side camera arms 16a, 16b (generally, "camera arm 16" or "wing") mounted to the outside of the vehicle cab 12 to display views to the operator typically provided by mirrors. If desired, the camera arms 16a, 16b may include conventional mirrors integrated with them as well, although the CMS 15 can be used to entirely replace mirrors. In additional examples, each side can include multiple camera arms, each arm housing one or more cameras and/or mirrors.

Each of the camera arms 16a, 16b includes a base that is secured to, for example, the cab 12. A pivoting arm is supported by the base and may articulate relative thereto (i.e., manual or power fold). Fixed wings may also be used. At least one rearward facing camera 20a, 20b is arranged respectively within camera arms. Each arm 16a, 16b may also provide a housing that encloses electronics that are configured to provide various features of the CMS 15.

The exterior cameras 20a, 20b each have an image capture unit that capture an exterior field of view FOV_{EX1}, FOV_{EX2} that each include at least one of the Class II (narrow angle) and Class IV (wide angle) views (Fig. 1B), which are legally prescribed views in the commercial trucking industry.

It is desirable to capture at least a portion of the trailer 14 in the field of view, for example, the side and/or end of the trailer, throughout vehicle operation. Class II and Class IV views are defined in European R46 legislation, for example, and the United States and other countries have similar drive visibility requirements for commercial trucks. Any reference to a "Class" view is not intended to be limiting, but is intended as exemplary for the type of view provided to a display by a particular camera. For example, certain views may be prescribed in SAE J3155 or other regulations. It should also be understood that multiple cameras may be used in each camera arm 16a, 16b to provide these or other views, if desired.

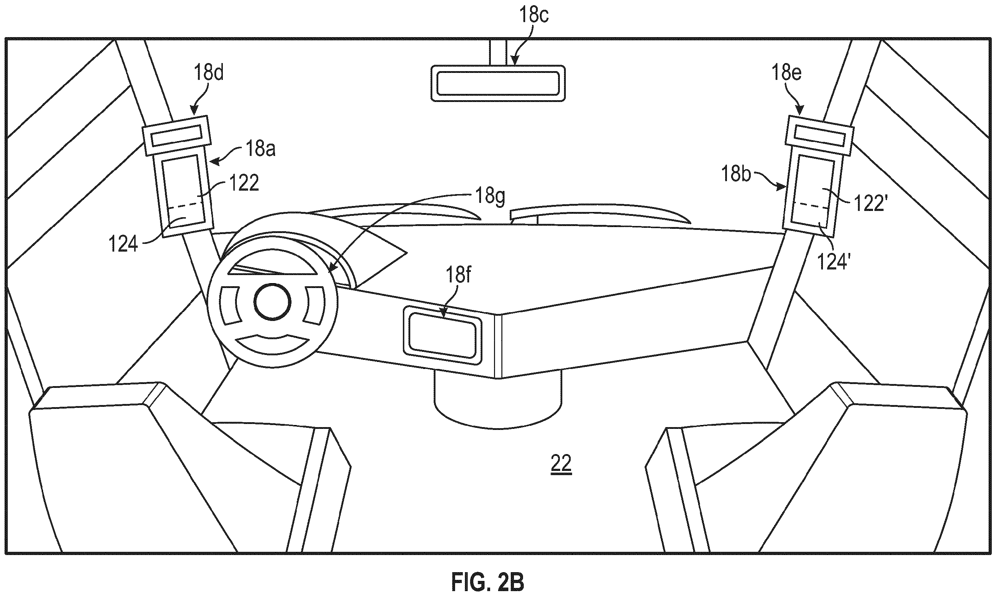

Figure 2A is a schematic view of the vehicle 10 cabin including displays, and Figure 2B illustrates an example layout of displays in the cabin. First and second video displays 18a, 18b are arranged on each of the driver and passenger sides within the vehicle cab 12 on or near the A-pillars 19a, 19b to display Class II (narrow angle) and Class IV (wide angle) views (e.g., Class II depicted above Class IV in a portrait-style configuration) on its respective side of the vehicle 10, which provide rear facing side views along the vehicle 10 (e.g., including portions of the trailer) that are captured by the exterior cameras 20a, 20b.

If video of Class V and/or Class VI views are also desired, a camera housing 16c and camera 20c may be arranged at or near the front of the vehicle 10 to provide those views (Fig. 1B). A third display 18c arranged within the cab 12 near the top center of the windshield can be used to display the Class V and Class VI views, which are toward the front of the vehicle 10, to the driver. The displays 18a, 18b, 18c face a driver region 24 within the cabin 22 where an operator is seated on a driver seat 26. The location, size and field(s) of view streamed to any particular display may vary from the configurations described in this disclosure and still incorporate the disclosed invention. For example, additional displays can be added near the first, second and third displays 18a, 18b, 18c, such as displays 18d, 18e, 18f, 18g, shown in Figure 2B, (generally, "display 18") to provide a display dedicated to providing a Class VIII view.

If video of Class VIII views is desired, camera housings can be disposed at the sides and rear of the vehicle 10 to provide fields of view including some or all of the Class VIII zones of the vehicle 10. As illustrated, the Class VIII view includes views immediately surrounding the trailer, and in the rear proximity of the vehicle including the rear of the trailer. In some cases, the Class VIII view is generated using a trailer mounted camera 20d. The trailer mounted camera 20d is a rear facing camera which provides a field of view behind the trailer. This rear view can be provided to one of the displays 18 within the vehicle cabin 22 as a rear view mirror replacement or as a rear view mirror supplement. This view is particularly beneficial as the trailer 14 may block some, or all, views provided by a conventional rear view mirror.

The CMS 15 is also configured to utilize the images from the cameras 20a, 20b, 20c, 20d (generally, "camera 20") as well as images from other cameras that may be disposed about the vehicle or in communication with the vehicle to determine features of the vehicle, identify objects, and facilitate driver assistance features such as display overlays and semi-automated driver assistance systems.

These features and functions of the CMS 15 are used to implement multiple CMS 15 systems that aid in operation of the vehicle. It should be noted that a controller 30 (Fig. 2A) for the CMS 15 can be used to implement the various functionalities disclosed in this application. The controller 30, which is in communication with the displays 18 and cameras 20, may include one or more discrete units. For example, a centralized architecture may have a common controller arranged in the vehicle 10, while a decentralized architecture may use a controller provided in each of the displays 18, for example. Moreover, a portion of the controller 30 may be provided in the vehicle 10, while another portion of the controller 30 may be located elsewhere, for example, the camera arms 16. In another example, a master-slave display configuration may be used where one display includes the controller 30 while the other display receives the commands from the controller 30.

In terms of hardware architecture, such a controller can include a processor, memory (e.g., memory 31, Fig. 2A), and one or more input and/or output (I/O) device interface(s) that are communicatively coupled via a local interface. The local interface can include, for example but not limited to, one or more buses and/or other wired or wireless connections. The local interface may have additional elements, which are omitted for simplicity, such as controllers, buffers (caches), drivers, repeaters, and receivers to enable communications. Further, the local interface may include address, control, and/or data connections to enable appropriate communications among the aforementioned components.

The controller 30 may be a hardware device for executing software, particularly software stored in memory (e.g., memory 31, Fig. 2A). The controller 30 can be a custom made or commercially available processor, a central processing unit (CPU), an auxiliary processor among several processors associated with the controller, a semiconductor-based microprocessor (in the form of a microchip or chip set) or generally any device for executing software instructions.

The memory 31 can include any one or combination of volatile memory elements (e.g., random access memory (RAM, such as DRAM, SRAM, SDRAM, VRAM, etc.)) and/or nonvolatile memory elements (e.g., ROM, hard drive, tape, CD-ROM, etc.). Moreover, the memory 31 may incorporate electronic, magnetic, optical, and/or other types of storage media. The memory 31 can also have a distributed architecture, where various components are situated remotely from one another, but can be accessed by the processor.

The software in the memory 31 may include one or more separate programs, each of which includes an ordered listing of executable instructions for implementing logical functions. A system component embodied as software may also be construed as a source program, executable program (object code), script, or any other entity comprising a set of instructions to be performed. When constructed as a source program, the program is translated via a compiler, assembler, interpreter, or the like, which may or may not be included within the memory 31.

The disclosed input and output devices that may be coupled to system I/O interface(s) may include input devices, for example but not limited to, a keyboard, mouse, scanner, microphone, camera, mobile device, proximity device, etc. Further, the output devices, for example but not limited to, a printer, display, etc. Finally, the input and output devices may further include devices that communicate both as inputs and outputs, for instance but not limited to, a modulator/demodulator (modem; for accessing another device, system, or network), a radio frequency (RF) or other transceiver, a telephonic interface, a bridge, a router, etc.

When the controller 30 is in operation, the processor can be configured to execute software stored within the memory 31, to communicate data to and from the memory 31, and to generally control operations of the computing device pursuant to the software. Software in memory 31, in whole or in part, is read by the processor, perhaps buffered within the processor, and then executed.

In various examples, the controller 30 includes one or modules having algorithm(s), equation(s) and/or decision manager(s) that receive input(s) from sensors and/or stored values. Example modules include Lane Detection Module 100, Object Detection Module 101, Trailer End Detection Module 102, Kinematic Module 104, Trailer Striking Area Prediction Module 106, Tractor Striking Area Prediction Module 108, and Collision Alert Module 110. Example inputs include a steering angle sensor 32, a vehicle speed sensor 34, and other sensor data. Vehicle configuration information 36, which relates to vehicle characteristics (e.g., trailer length, axle position, trailer type/wheelbase, tractor configuration/wheelbase, hitch point location etc.), provided by the manufacturer, operator, and/or determined by one or more of the modules. During vehicle operation, the controller 30 may communicate information to the driver, fleet operator, or others using an output 39 (e.g, displays 18, speaker, etc.). Example operation and uses of these modules are disclosed in International Application No. PCT/US2023/083416 filed on December 11, 2023, entitled "CAMERA MONITOR SYSTEM WITH TRAILER CURB STRIKE ALERT AND TRAILER STRIKING AREA," which is incorporated herein by reference in its entirety.

The object detection module 101 includes one or more image processing algorithms configured to identify objects in the captured images. The algorithms may be used to identify VRU's (e.g., pedestrians or cyclists), attributes of the tractor 12 and/or trailer 14, other vehicles, signs, curbs, trees, buildings and/or other inanimate objects.

The lane detection module 100 also uses image processing of the captured images to identify markings on the roadway, such as lane markers that visually divide adjacent lanes. One example algorithm is described in United States Publication No. US2023/117,719, entitled "CAMERA MIRROR SYSTEM DISPLAY FOR COMMERCIAL VEHICLES INCLUDING SYSTEM FOR IDENTIFYING ROAD MARKINGS", which is incorporated by reference in its entirely. In that publication, a lane detection module is described in which an object detection algorithm identifies a lane marking in a roadway by filtering a color of the lane marking from a surrounding portion of the captured image. Other techniques based upon deep learning technology or another computer vision method may be used, if desired.

The trailer end detection module 102 is another image processing module that extracts one or more trailer features from the captured images to determine the location of the end of the trailer in 3D space. These extracted attributes can be used to detect objects such as tractor wheels, trailer edges and other features. Example wheel detection algorithm techniques are disclosed in United States Publication No. US2023/202,394 entitled "CAMERA MONITOR SYSTEM FOR COMMERCIAL VEHICLES INCLUDING WHEEL POSITION ESTIMATION", which is incorporated herein by reference in its entirety. Example trailer edge detection algorithm techniques are disclosed in United States Publication No. US2023/125,045 entitled "TRAILER END TRACKING IN CAMERA MONITORING SYSTEM", which is incorporated herein by reference in its entirety. Other techniques may be used, if desired.

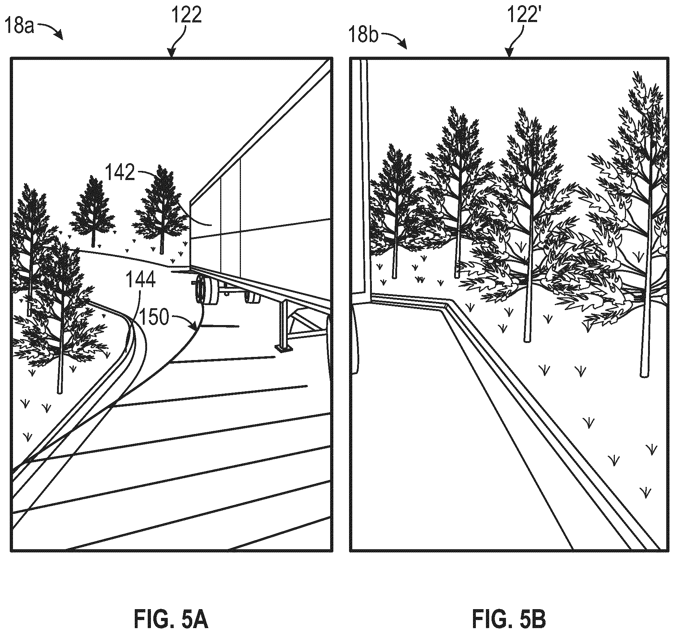

In one example operation, the CMS 15 utilizes the kinematics module 104 to predict a striking zone of the trailer 14 during a turn operation and generates a two dimensional overlay to digitally impose over at least one of the displayed Class II/IV images thereby showing the vehicle operator an expected striking zone of the trailer 14 and allowing the vehicle operator adjust the vehicle operations accordingly. The CMS 15 uses the received captured images from the cameras 20a, 20b, as well as any other cameras and vehicle operation data received from a general vehicle controller through a data connection, such as a CAN or LIN bus, to estimate a predicted position of the tractor and/or trailer side at each of multiple side positions and multiple points in time. These positions are converted to a geometric area encompassing all the positions. In this way, the shape and size of the geometric area is not fixed, but rather reflects an actual predicted striking area of the trailer (e.g., see 150 in Fig. 5A).

In order to avoid accidental strikes, the striking area prediction system uses the vehicle data (e.g. steering angle, steering rate, trailer angle, vehicle speed, trailer wheelbase, tractor wheelbase, hitch point location, yaw rate and the like) to generate a predicted striking zone over time. The predicted striking zone is a prediction of the path the trailer will take over the course of the turn and is re-calculated continuously as the turn progresses. The trailer striking area is also useful in a potential "curve cut" scenario when the vehicle 10 is traveling down a curved roadway. In a curvy road, it becomes more likely for the trailer end to cross the lane markers. indicating boundaries to adjacent lanes, creating a potentially dangerous situation.

The CMS 15 includes a Decision Manager or Collision Alert Module 110 that communicates with the modules 101-108 to evaluate the proximity between the predicted tractor and/or trailer paths (i.e., the tractor and trailer striking areas) and one or more objects (e.g., predicting an imminent curb strike, curve cut, object collision etc.). The decision manager considers the estimated time to the event, severity (what the object is), closing rate between objects, etc. and may provide an overlay and/or alert. While various overlays and alerts may useful in increasing operator awareness and enhancing safety, it is desirable to provide the operator with information to more easily and proactively manage the vehicle to safely navigate through its surroundings. One such approach is to automatically provide the operator with an enlarged or zoomed view of the region(s) of interest in the captured field of view from a given camera.

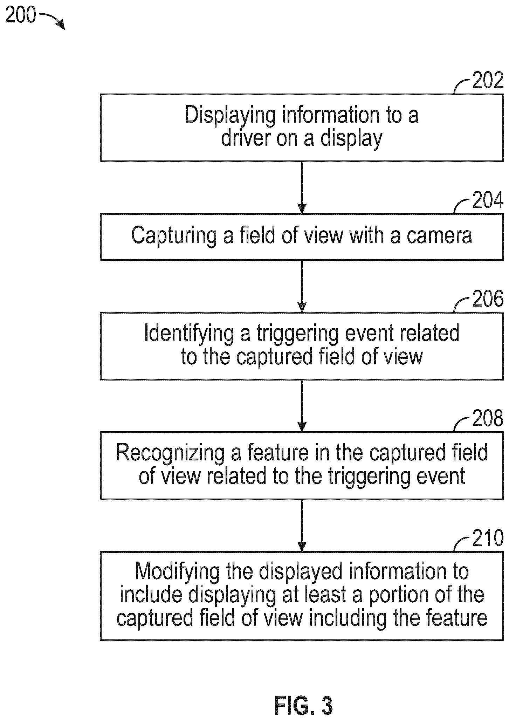

To this end, a method 200 of displaying camera views in a CMS 15 is shown in Figure 3. The method 200 includes displaying information to an operator on one of the displays 18 (e.g., 18a, 18b, 18c, 18d, 18e, 18f and/or 18g; block 202), which occurs during normal vehicle operation. That is, each display 18 is used to illustrate different information to the operator, typically, continuously throughout the vehicle's use. For example, display 18a may illustrate left side Class II and Class IV views 122, 124, and display 18b may illustrate right side Class II and Class IV views 122', 124'. Display 18c may depict Class V/Class VI views. Displays 18d, 18e may illustrate views such as Class VIII views, display 18f may show information related to vehicle information and/or comfort features (e.g., HVAC, radio, etc.), and display 18g may depict vehicle operational information, such as vehicle speed, engine RPM, fuel level, operating temperatures, etc. All such examples are for illustrative purposes, and it should be understood that variations may be used.

Also during normal vehicle operation, the various cameras 20 capture a field of view with its respective image capture unit (block 204). The normally displayed images on one or more the displays can be changed to bring heighted attention to the operator of a situation, for example, in response to a triggering event related to the captured field of view (e.g., predicting an imminent curb strike, curve cut, object collision, jack knife, etc.; block 206) In one example, the triggering event occurs by recognizing a feature in the captured field of view, for example, in response to image processing of the captured image and/or by ultrasonic sensor, LiDar, radar, etc. (block 208). The displayed information on one or more of the displays 18 is then modified to include displaying at least a portion of the captured field of view including the feature (block 210). The displayed portion of the captured field of view with the feature may be an enlarged (zoomed in) version of another displayed version of that captured field of view.

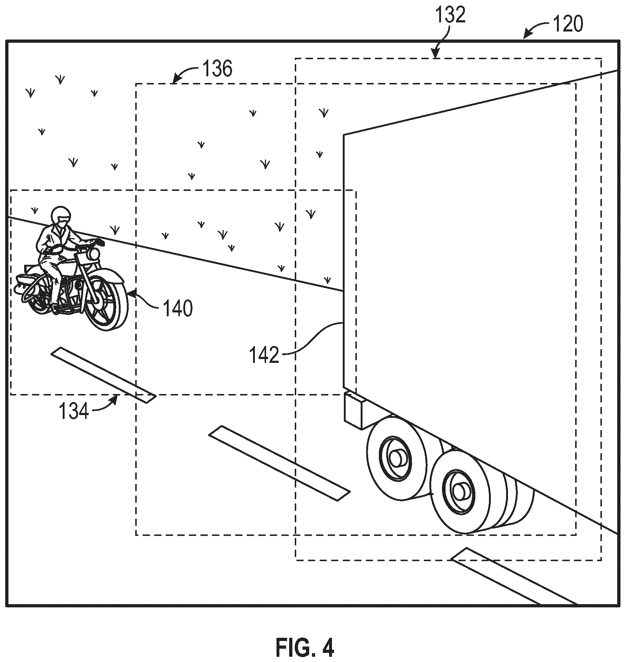

Figure 4 illustrates a captured field of view 120 from one of the cameras 20 used to provide at least one legally prescribed view. In one example a camera is used to provide a legally prescribed view (e.g., Class II and/or Class IV/narrow angle and/or wide angle), the captured field of view 120 is cropped to provide a first region of interest 132 corresponding to the legally prescribed field of view. The captured field of view 120 can be cropped to provide a second region of interest 134 corresponding to the at least the portion of captured field of view 120. The least the portion of the captured field of view (e.g., second region of interest 134) is enlarged on its display 18 compared to a displaying of the legally prescribed field of view.

In the case of a single, common camera providing both the first and second regions of interest 132, 134, at least a portion of the first and second regions of interest 132, 134 may overlap one another, for example. Moreover, at least a portion of the second region of interest 134 may lie outside the legally prescribed field of view since the camera 20 may provide a larger field of view than needed to provide the legally prescribed view. The captured field of view 120 may also be cropped to provide a third region of interest 136 corresponding to another legally prescribed view (e.g., the Class IV/wide angle in the illustrated example) where both legally prescribed views are illustrated on a common display (e.g., display 18a or 18b).

Using the example shown in Figure 4, a motorcycle 140 in the vehicle's blind spot and/or outside the legally prescribed views is sensed by the CMS 15 (e.g., by image processing, ultrasonic sensor, LiDar, radar, etc.). The disclosed method 200 crops the second region of interest 134 to include not only the motorcycle 140 but also a feature (e.g., trailer edge 142), which gives the operator context concerning the position of the motorcycle 140 relative to the vehicle 10. The second region of interest 134 is then displayed in an enlarged format (zoomed in) on one of the displays 18. Thus, the displayed information on one or more of the displays 18 is modified to include displaying at least a portion of the captured field of view (second region of interest 134) including the feature (e.g., trailer end 142).

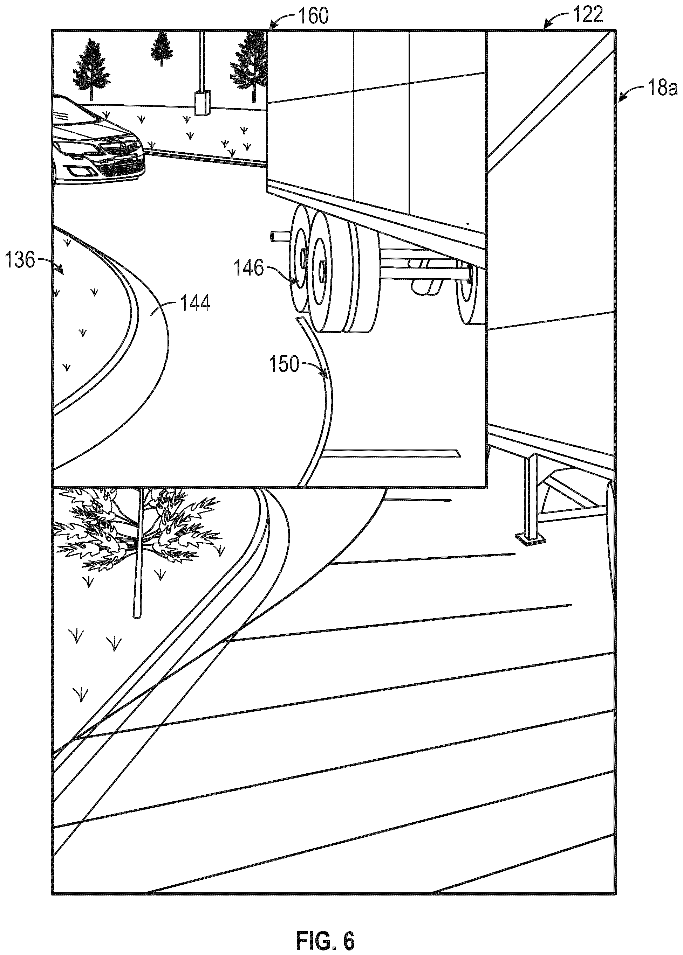

As to where the second region of interest 134 is displayed, the first and second regions of interest 132, 134 can be displayed on different displays than one another (e.g., first region of interest 132 depicted on display 18a/18b and second region of interest 134 depicted on display 18f). Alternatively, the first and second regions of interest 132, 134 can be displayed on a same display as one another (e.g., both on display 18a or both on display 18b). For example, Figures 5A and 5B respectively illustrate left- and right-hand displays 18a, 18b respectively depicting the corresponding narrow angle views 122, 122' (e.g., Class II views). During a turning maneuver, a trailer striking area 150 may be overlayed on the display 18a to communicate to the operator the inside trailer path at the current steering angle. The trailer path may intersect or be in close proximity to an object, such as a curb 144. In such a scenario, it may be desirable to display an enlarged view of the second region of interest 134 in a window 160 arranged over the display of the legally prescribed field of view, i.e., narrow angle view 122, as shown in Figure 6. The enlarged image includes the features of most interest to the operator, here, the curb 144 and the trailer's wheels 146, which the operator can more closely monitor using the zoomed view.

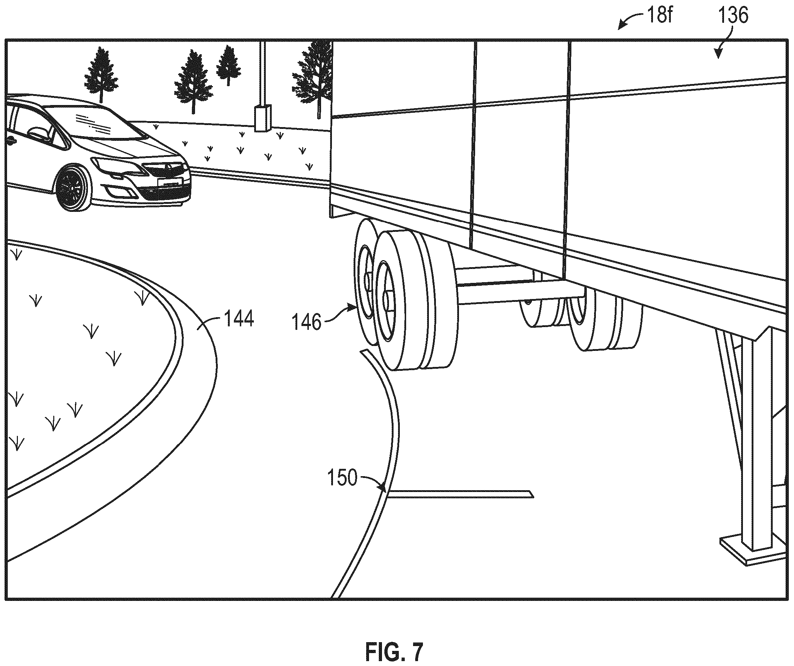

In another example, the modifying step may include temporarily replacing (i.e., swapping out) one of the displayed legally prescribed fields of view (e.g., narrow displayed view 122 on display 18a) with the enlarged view. With such an approach, it may be desirable to limit the how long the legally prescribed view is replaced. To this end, the displayed second region of interest 134 may be moved from the display 18a to another display (e.g., 18f; see, Fig. 7) after a predetermined criterion is met, such as a risk scenario of a greater rank than the triggering event occurs (e.g., legally prescribed view has been absent from display for more than a predetermined time, or a new triggering event presenting a greater risk of collision than the current triggering event).

Any number of triggering events can be used to provide a zoomed view to the operator for enhanced awareness. For example, the triggering event may be a potential collision with an object 140, and the feature includes at least one of the object and a portion of a trailer in closest proximity to the object. The object may be an overtaking vehicle (e.g, motorcycle or other motorized vehicle), and the portion of the trailer includes a trailer end 142 to ensure that the operator does not inadvertently change lanes in front of the overtaking vehicle. In another example, the object is a vulnerable road user. In yet another example, the triggering event is a potential trailer curb strike, and the feature includes at least one of the curb 144 and the trailer wheel 146. In still another example, the triggering event is a potential trailer lane crossing, and the feature includes at least one of a trailer end 142 and a lane marking. In another example, the triggering event is a steering angle above a threshold (e.g., indicative of an imminent jackknife), and the feature is a region between a tractor and a trailer, which may be captured by a camera other than the cameras 20a, 20b, 20c.

It should also be understood that although a particular component arrangement is disclosed in the illustrated embodiment, other arrangements will benefit herefrom. Although particular step sequences are shown, described, and claimed, it should be understood that steps may be performed in any order, separated or combined unless otherwise indicated and will still benefit from the present disclosure.

Although the different examples have specific components shown in the illustrations, embodiments of this disclosure are not limited to those particular combinations. It is possible to use some of the components or features from one of the examples in combination with features or components from another one of the examples.

Although an example embodiment has been disclosed, a worker of ordinary skill in this art would recognize that certain modifications would come within the scope of the claims. For that reason, the following claims should be studied to determine their true scope and content.

## Claims

1. A method of displaying camera views in a camera monitor system for a tractor and trailer, the method comprising:
displaying information to a driver on a display;
capturing a field of view with a camera;
identifying a triggering event related to the captured field of view;
recognizing a feature in the captured field of view related to the triggering event; and
modifying the displayed information to include displaying at least a portion of the captured field of view including the feature.

2. The method of claim 1, wherein the displayed information is a legally prescribed field of view provided by the captured field of view, optionally wherein the legally prescribed field of view corresponds to one of a wide angle vehicle side rear view and a narrow angle vehicle side rear view.

3. The method of claim 2, wherein the modifying step includes at least temporarily replacing the legally prescribed view.

4. The method of claim 3, comprising a step of moving the displayed at least the portion of the captured field of view from the display to another display after a predetermined criterion, optionally wherein the predetermined criterion is a risk scenario of a greater rank than the triggering event.

5. The method of any preceding claim, comprising a step of cropping the captured field of view to provide a first region of interest corresponding to a legally prescribed field of view, and a step of cropping the captured field of view to provide a second region of interest corresponding to the at least the portion of the captured field of view, and the least the portion of the captured field of view is enlarged on the display compared to a displaying of the legally prescribed field of view.

6. The method of claim 5, wherein at least a portion of the first and second regions of interest overlap one another.

7. The method of claim 5 or claim 6, wherein at least a portion of the second region of interest is outside the legally prescribed field of view.

8. The method of any one of claims 5 to 7, wherein the first and second regions of interest are displayed on different displays than one another.

9. The method of any one of claims 5 to 8, wherein the first and second regions of interest are displayed on a same display as one another, optionally wherein the second region of interest is displayed in a window arranged over the display of the legally prescribed field of view.

10. The method of any one of claims 5 to 9, comprising a step of cropping the captured field of view to provide a third region of interest corresponding to another legally prescribed view, both legally prescribed views being illustrated on a common display.

11. The method of any preceding claim, wherein the triggering event is a potential collision with an object, and the feature includes at least one of the object and a portion of a trailer in closest proximity to the object, optionally wherein at least one of:
the object is an overtaking vehicle, and the portion of the trailer includes a trailer end; and
the object is a vulnerable road user.

12. The method of any preceding claim, wherein the triggering event is a potential trailer curb strike, and the feature includes at least one of a curb and a trailer wheel.

13. The method of any preceding claim, wherein the triggering event is a potential trailer lane crossing, and the feature includes at least one of a trailer end and a lane marking.

14. The method of any preceding claim, wherein the triggering event is a steering angle above a threshold, and the feature is a region between a tractor and a trailer.

15. A camera monitor system for a vehicle comprising:
at least one camera configured to capture a field of view;
multiple displays including first and second displays configured to respectively display a first information and a second information, wherein the first information corresponds to a legally prescribed field of view; and
a controller in communication with the first and second displays and the at least one camera, the controller configured to:
identify a triggering event related to the captured field of view;
recognize a feature in the captured field of view related to the triggering event; and
modify at least one of the first and second information to include displaying at least a portion of the captured field of view including the feature, the displayed at least portion of the captured field of view enlarged relative to the displayed legally prescribed field of view.
